# EUROPEAN PATENT SPECIFICATION

(11) **EP 0 916 263 B1**
(45) Date of publication and mention of the grant of the patent: **16.03.2005**
(21) Application number: 98203462.1
(22) Date of filing: 14.10.1998
(51) Int. Cl.: A21D 13/00, A21D 2/18

(54) **Savoury composite bakery product and savoury sponge**
Schmackhafte zusammengesetzte Backware und Backware
Produit composite de boulangerie savoureux et produit de boulangerie

(30) Priority: 14.11.1997 GB 9724179
(43) Date of publication of application: 19.05.1999
(73) Proprietor: SOCIETE DES PRODUITS NESTLE S.A., 1800 Vevey (CH)
(72) Inventor: Englund, Catarina, 25224 Helsingborg (SE); Hug, Daniel, 1675 Vauderens (CH); Svensson, Bengt, 25232 Helsingborg (SE)

(56) References cited:
- EP-A- 0 204 940
- EP-A- 0 688 503
- EP-A- 0 826 306
- EP-A- 0 839 456
- WO-A-95/22906
- WO-A-99/02039
- DE-C- 19 648 506
- US-A- 4 390 550
- US-A- 4 594 255
- US-A- 4 622 226

## Description

The present invention relates to a composite product having a dough-based part and a filling.

A well-known savoury composite product is made from sandwich bread with a filling. The sandwich bread is usually made with yeast leavened dough which has a high flour content. The keeping properties of such bread are relatively poor, as the bread wrapped or unwrapped will stale within a couple of days. The staling is due to retrogradation of the starch in the bread and gives hardness to the bread texture.

There is an increasing need for products which have a high nutritional value and can be stored chilled or refrigerated for a period of 45 days and which can be consumed directly from refrigeration or after having been subjected to ambient temperature for a couple of hours. It is desirable that such products exhibit substantially the same freshness and organoleptic qualities during the storage period.

EP-A-0688503 discloses a filled panettone type savoury product wherein the dough product and the filling have the same Aw of 0,9.

EP-A-0839456 (document according to Art. 54(3) EPC) discloses a biscuit type product filled with a yoghurt cream.

An aim of the present invention is to provide a savoury composite snack product of the above-mentioned type having a baked dough-based part and a savoury filling.

Accordingly, the present invention provides a savoury composite food product having a dough-based part and a filling,
the dough based part being a savoury sponge with a Aw in the range from about 0.72 to 0.93, and
the filling being a savoury cream with an Aw in the range from about 0.85 to 0.93.

The present invention is as defined by the appended claims.

The dough-based part of the composite product according to the invention is a sponge. In the present context the term "sponge" means a dough-based product made from liquid dough raised with a chemical leavening agent. The sponge is different from for example brioches, which are made from yeast leavened dough or panettone type of products that are made from dough that has been subjected to fermentation. The sponge is also different from other types of yeast leavened dough such as conventional sandwich bread. The sponge structure is well known from sweet sponge cakes.

It has been found that the savoury composite product with the above-mentioned Aw values can be stored chilled or refrigerated for at least 45 days retaining a soft sponge structure and a fresh cream with a creamy texture. A suitable storage temperature is from 4 to 8° C, but can be up to e.g. 12° C. The composite product exhibits an Aw of 0.83 to 0.90.

The composite product may be consumed directly after refrigeration or up to 12 hours after having been exposed to room temperature or even later.

In a preferred embodiment of the composite savoury the dough based part being a savoury sponge with a Aw in the range from about 0.72 to 0.85, and the filling being a savoury cream with an Aw in the range from about 0.85 to 0.93.

In a further preferred embodiment of the composite savoury product the Aw value of the savoury cream is from 0.1 to 0.2 higher than that of the savoury sponge. This will allow a slight moisture transfer from the cream to the sponge during storage which will keep the sponge soft and decrease staling during storage. Problems in relation to the making of a savoury sponge are obtaining a light structure, flexibility, elasticity and a low Aw. The flexibility and elasticity are important not only for the texture and mouthfeel of the sponge but also for manufacturing thereof. For industrial continuous production of sponges it is important that the baked sponge can be trained and bent without breaking.

The sugar in a conventional sponge recipe gives sweetness and texture and can be used for reducing the Aw. Removing the sugar from the normal sponge recipe does not give a satisfactory light sponge. It has been found that the use of non-sweet oligo and poly saccharide such as maltodextrin as a bulking agent allows a savoury sponge to be made with the above characteristics and without sugar, e.g. glucose, fructose and/or sucrose, inverted sugar, honey etc. A suitable Maltodextrin has a Dextrose equivalent between D4 and D30, or a mixture of these. These maltodextrins have a substantial neutral taste. The expression "non-sweet bulking agent" means a bulking agent that does not contributes with any substantial sweetness to the product. The "non-sweet bulking agent" is a bulking agent which preferably has a taste corresponding to maltodextrin with a dextrose equivalent numbers equal to or lower than D30, advantageously with D21 or a lower D numbers. If maltodextrin D30 used taste masking with salt is usually needed.

Throughout the present specification the percentages and parts are given by weight unless otherwise indicated.

In the present context the Aw refer to water activity. The water activity is defined as a ratio between the partial vapour pressure of water at the surface of the sample and the vapour pressure of pure water at the same temperature. The Aw may, however, be determined indirectly by measuring the equilibrium relative humidity reached in a close chamber at constant temperature. To this a leak-tight container having a thermostatically regulated chamber and an electronic humidity sensor is used, e.g. a Novasina, Switzerland.

The expression "composite product" is a product with at least two distinguishable parts or a product combined by at least two components. An example of a composite product is e.g. a sandwich having a bread part layered with a filling. In a preferred version of the composite product according to the invention, the product is a layered product having two or more sponge layers with cream in-between. The cream adheres to the sponges.

It is preferred that the sponge has a pH in range from about 4.4 to about 6.0. A preferred cream has a pH in the range from about 5.5 to 7.2. A decreased pH will provide an extra microbiological hurdle to the safety of the product.

The sponge preferably comprises, by weight of the sponge dough formulation, 20 to 30 % wt flour, 5 to 15 % wt non-sweet bulking agent, fat, egg base and chemical leavening agent. The sponge has a savoury taste and no sugar or substantially no sugar is added to the recipe. A particular good savoury taste is obtained when the non-sweet bulking agent comprises 5 to 15 % wt poly or oligo saccharide, preferably Maltodextrin. A suitable amount of fat in the sponge is 3 to 20 % fat, preferably from 3 to 15 % fat.

Suitable flour types are for example wheat, whole meal, rye or a combination thereof. The sponge may be flavoured. The flavourings, which can be used, are e.g. cheese, tomato, Italian spices and Mexican spices etc.

Advantageously, starch may be used in an amount from about 3 to 10 % wt by weight of the dough formulation. The starch is e.g. used for weakening the flour.

With the above-mentioned ingredients a savoury sponge can be produced having substantially the same structure through out the sponge and the pore size is fine and substantially regular.

The filling of the savoury composite food product is a savoury cream. In the present context a cream is consisting of a mixture of a water phase and a fat phase.

A preferred savoury cream comprises 25 to 40 % wt dairy product, 15 to 30 % wt non-sweet bulking agent and 15 to 30 % fat. The amounts given in weight of ingredients in cream recipe. In a favourable composition out of the dairy product, 5 to 15 % wt of the ingredients in the cream recipe is fermented dairy product. A preferred amount of dairy product is from 30 to 36 % wt of the ingredients of the cream recipe. No sugar or substantially not sugar is added to the cream. Other ingredients are for example inverted sugar, salt, and flavourings. The flavourings, which can be used, are e.g. cheese, tomato, Italian spices, Mexican spices, ham, poultry, liver etc. Lactic acid or other organic acid may be added to the cream in order to generate an acid taste, enhance flavour or improve microbiological stability thereof.

It is desirable to use a fat with special melting properties. The fat should not melt at room temperature but only once the product is in the mouth. Such a fat is e.g. a fat comprising a combination of vegetable fat, animal fat, and an emulsifier.

In the present context the expression "dairy product" is a product such as skimmed milk, whole milk, reconstituted milk made from milk powder or evaporated milk, fermented dairy product, or a combination thereof. The term "fermented dairy product" is a product such as fermented milk, yoghurt, cream cheese, sour cream, dairy cream, powdered fermented milk mixed in milk or water, powdered cream cheese or quark mixed in water or milk, or a combination thereof.

In order to obtain increased orgonolepic qualities it may be preferred to use sour cream or dairy cream having 25 to 45 % of fatty substance.

A cream can be made with the above-discussed ingredients as follows: The fermented dairy product and the bulking agent and all other ingredients except fat are heated to pasteurisation, e.g. from 60 to 115° C. The mixture is then cooled, e.g. to below 40° C but usually below 30° C, and the fat is then added. The suitable temperature at which the fat should be added depends on the type of fat chosen for the cream. The fat and the cooled mixture are stirred so as to obtain a homogeneous cream. This cream is usually viscous and requires further cooling in order to be stable.

The cream may be aerated to make it lighter. This can be done by injecting gases such as inert gas, nitrogen, air, and carbon dioxide into the cream while whipping and cooling it. In this way, a mousse structure may be obtained. A suitable amount nitrogen is from 25 to 150 ml per 100 gram of cream.

The cream has a specific weight preferably in the range of 400 to 800 gram/litre.

Another preferred savoury cream is a meat cream. It comprises 30 to 50% wt meat, 20 to 40 % wt fat, and 10 to 30% wt texturising agent. The amounts are given in weight of ingredients in cream recipe. The meat cream may also comprise milk powder, nitrite salt, flavours, and spices.

In addition to Maltodextrin, fermented cereal can be used as texturising agent to give body to the dough or cream mixtures discussed above.

It follows from the above that the savoury composite product can be made essentially sugar-free, i.e. that no sugar is used in the recipe or substantially no sugar.

The invention also relates to a composite product consisting of at least two parts of sponge separated by a filling.

Furthermore, the invention also relates to a savoury sponge as such. This sponge is of the above-discussed type and may be used in other applications than those discussed in the present context.

In addition to the above-discussed ingredients additional ingredients may be added both to the sponge dough and to the cream for giving colour, texture or taste. Examples of such ingredients are herbs, seeds, nuts, and pieces of vegetables, concentrates or juice of vegetables or fruits.

### EXAMPLE 1 - Sponge

Liquid dough for sponges is prepared from the following ingredients (% wt).

| | |
|---|---|
| 23 to 26 % | Flour being wheat flour or wheat flour mixed with whole meal |
| 5 to 10% | Maltodextrin (DE 6 or DE21) |
| 3 to 4 % | Potato or maize starch |
| 4 to 5 % | Milk powder |
| 20 to 25 % | Liquid whole egg |
| 1.5 to 2 % | Chemical leavening agent |
| 7 to 9 % | Fat substance e.g. Margarine |
| 0.5 to 1 % | Salt |
| 20 to 30 % | liquid e.g. water or milk |

Emulsifier and flavouring.

One example of a preferred liquid dough recipe is: 24 % mixed wheat and wholemeal flour, 8 % Maltodextrin DE6, 4 % potato starch, 4 % milk powder, 24 % liquid whole egg, 1.8 % chemical leavening agent, 9 % margarine, 1 % salt, emulsifier, cheese flavouring, the remaining percentages being milk.

For a sandwich type product the sponges are baked from a liquid dough of the above-mentioned type. The liquid dough is dosed in a layer of about 2 to 5 mm on a baking plate and baked. The baking may advantageously take place in a gas oven at an average temperature of 200 to 240° C, preferably from 215 to 225° C for a period of 5 to 10 min.

### EXAMPLE 2 - Cream

A dairy cream may be prepared with the following ingredient % wt.

| | |
|---|---|
| 5 to 10 % | Skimmed milk powder |
| 15 to 30 % | Maltodextrin DE6 to D21 |
| 20 to 25 % | Milk |
| 5 to 10 % | Yoghurt (natural) |
| 4 to 10 % | Cheese flavouring |
| 0 to 3 % | Invert sugar |
| 15 to 25 % | Fat |
| 0.7 to 2.0 % | Salt |

One example of a preferred cream recipe is prepared using 7 % skimmed milk powder, 25 % Maltodextrin DE21, 9 % yoghurt (natural), 6 % cheese flavouring, latic acid, 3 % Invert sugar, 25 % fat, 1.0 % salt, and the remaining percentages being milk.

The cream may be prepared as discussed above by heat treating all the ingredients except the fat to pasteurisation. After the pasteurisation and a cooling to below 30° C. The fat is added and the mixture stirred. The cream is aerated to make it lighter. This is being done by injecting gases nitrogen, about 100 ml per 100 gram of cream, into the cream while whipping and cooling the it. In this way a mousse structure is obtained.

### EXAMPLE 3 - Storage tests

Storage tests were conduct as follows with samples of savoury composite products made as described in the examples. Samples of composite products are cheese flavoured wheat sponges with a cheese cream. The product samples are air packed in flow packs.
Storage temperatures: 8, 12, and 16°C
The samples were analysed after 0,15,30,45 days.
Triplicates for each analyses

The following Aw values were measured at 12°C : Initial value for cheese cream: 0.87. Initial value for cheese wheat sponge: 0.77.

For the combined cheese wheat sponge and cheese cream measured at 12°C: Initial: 0.88, 15d:0.88, 30d:0.89, and 45d:0.88.

The following pH values were measured for the cheese wheat sponge & cheese cream:
8°C: Initial: 6.4, 15d:6.2, 30d:6.1, and 45d:6.3.
12C°: Initial: 6.4, 15d:6.1, 30d:6.1, and 45d:6.3.
16°C: Initial: 6.4, 15d:6.1, 30d:6.2, and 45d:6.1.

The microbiological quality was evaluated on the basis of the following criteria: total viable counts, yeast and moulds, lactic acid bacteria, enterobacteriaceae. The trials performed above show a shelf life of 45 days for the current product, i.e. there is no growth of spoilage bacteria.

### EXAMPLE 4- Sensory Evaluation

An internal panel evaluated the samples of example 3 during a period of 45 days (0,14d,30d,45d) at 2 different temperatures (4°C, 12°C) in order to investigate changes in taste and texture, such as staling of the sponge and the creaminess of cream, of the composite product.

The following parameters were evaluated:
1)sponge texture: dryness, sogginess, and toughness
2)sponge taste: bread taste, and off taste.
3)cream taste: total intensity, special cheese flavour, off taste, and after taste.
4)cream texture: hardness, creaminess, and melting properties.

No distinct or major differences within the storage period could be detected by the tasting panel.

### Example 5 - Challenge test

In order to investigate the safety of the snack products a challenge test with Staphylococcus Aureus is conducted with savoury composite products of different water activities made as described in the examples. Samples of composite products are neutral wheat sponges with a cheese cream. The product samples are air packed.

The bacteria innoculation level: 10log3 CFU/g of Staphylococcus Aureus is inoculated into the composite product.
Storage conditions and sampling:
8°C / 8 weeks: analyses every second week
12°C / 8 weeks: analyses every second week
Triplicate for each analyses.

The different water activities are obtained by altering the water activity of the cream. The following Aw values were measured at room temperature:
Initial value for the cheese creams: Sample 1: 0.86, sample 2: 0.90, sample 3: 0.92, sample 4 0.93
Initial value for neutral wheat sponge: 0.78
Composite samples: Sample 1: 0.85, sample 2: 0.87, sample 3: 0.88, and sample 4: 0.89 The Aw values did not change during storage.

The following pH values were measured for the 4 different composite products at room temperature:
Composite samples: Sample 1: 6.4, sample 2: 6.2, sample 3: 6.2, and sample 4: 6.3
The values did not substantially change during storage.

The microbiological quality is evaluated on the basis of the viable counts of Staphylococcus Aureus. No risk is detected for toxin production at refrigerated temperatures, i.e. 8 and 12°C for the examined snack samples during the 8 weeks of storage.

### Example 6 - Cream

A meat cream may be prepared with the following ingredient % wt.

| | |
|---|---|
| 5 to 10% | meat |
| 10 to 20% | Animal fat |
| 25 to 40% | liver |
| 10 to 20% | Other fat |
| 0.5 to 3% | Nitrite salt |
| 0.1 to 1% | Flavours |
| 0.1 to 1% | Spices |
| 10 to 30% | Maltodextrin DE 6 to DE21 |
| 5 to 15% | Skimmed milk powder |

One example of a preferred meat cream recipe is prepared using 37% meat and liver, 15% pork fat, 15% other fat, 1.9 % salt, 0.4% meat flavours, 10% skimmed milk powder and the remaining percentages being maltodextrin DE6.

The meat cream may be prepared as discussed above for the dairy cream, i.e. by heat treating all the ingredients mentioned above except the fat to pasteurisation temperature e.g. 60-115°C. After the pasteurisation and a cooling to below 30°C the fat is added and the mixture is stirred. The cream is aerated to make it lighter. This is being done by injecting nitrogen gas, about 100 ml per 100 gram of cream, into the cream while whipping and cooling it. In this way a mousse structure is obtained.

## Claims

1. A savoury composite food product having a dough-based part and a filling,
the dough-based part being a savoury sponge with a Aw in the range from about 0.72 to 0.93, and
the filling being a savoury cream with an Aw in the range from about 0.85 to 0.93,
wherein the savoury sponge comprises by weight of the dough formulation
10 to 30 % wt flour,
5 to 15 % wt non-sweet bulking agent,
fat, egg base and chemical leavening agent,
wherein the non-sweet bulking agent comprises 5 to 15 % wt poly or oligo saccharide, preferably Maltodextrin.

2. A savoury composite food product according to claim 1, wherein the sponge comprises by weight of the dough formulation 3 to 10 % wt starch.

3. A savoury composite food product according to either claim 1 and claim 2, wherein the sponge comprises 3 to 20 % fat by weight of the dough formulation.

4. A savoury composite product according to any of claims 1 to 3, wherein the sponge has substantially the same structure throughout the sponge and the pore size is substantially regular.

5. A savoury composite product according to any of claims 1 to 4, wherein the cream comprises by weight of cream formulation
25 to 40 % dairy product
15 to 30 % non-sweet bulking agent and
15 to 30 % fat.

6. A savoury composite product according to claim 5, wherein the dairy product comprises fermented dairy product constituting from 5 to 15 % of the weight of the cream formulation.

7. A savoury composite product according either of claim 5 and claim 6, wherein the cream is made by heat treating the dairy product and the bulking agent to pasteurisation and adding the fat after cooling of the pasteurised mixture to a temperature below 30° C.

8. A savoury composite product according to any of the proceeding claims comprising at least two layers of savoury sponge with a layer of cream in-between.

9. A packed savoury composite product according to any of the proceedings claims.

10. A savoury sponge dough containing by weight of the dough formulation:
- 20 to 30 % wt flour,
- 5 to 15 % wt non-sweet bulking agent,
- 3 to 20 % of fat,
- egg base,
- chemical leavening agent,
wherein the non-sweet bulking agent comprises 5 to 15% wt poly or oligo saccharide, preferably maltodextrine and wherein the said dough has a Aw in the range from about 0.72 to 0.93.

## Patentansprüche

1. Würziges zusammengesetztes Nahrungsmittelprodukt mit einem Teil auf Teigbasis und einer Füllung,
wobei der Teil auf Teigbasis ein würziger Schwamm mit einem Aw im Bereich von etwa 0,72 bis 0,93 ist, und
die Füllung eine würzige Creme mit einem Aw im Bereich von etwa 0,85 bis 0,93 ist,
wobei der würzige Schwamm, in Gewicht der Teigformulierung,
20 bis 30 Gew.-% Mehl,
5 bis 15 Gew.-% eines nicht-süßen Füllmittels,
Fett, Eibasis und ein chemische Treibmittel umfaßt,
wobei das nicht-süße Füllmittel 5 bis 15 Gew.-% Poly- oder Oligosaccharid, vorzugsweise Maltodextrin, umfaßt.

2. Würziges zusammengesetztes Nahrungsmittelprodukt nach Anspruch 1, wobei der Schwamm, in Gewicht der Teigformulierung, 3 bis 10 Gew.-% Stärke umfaßt.

3. Würziges zusammengesetztes Nahrungsmittelprodukt nach Anspruch 1 oder Anspruch 2, wobei der Schwamm, in Gewicht der Teigformulierung, 3 bis 20 Gew.-% Fett umfaßt.

4. Würziges zusammengesetztes Produkt nach irgendeinem der Ansprüche 1 bis 3, wobei der Schwamm durch den gesamten Schwamm hindurch im Wesentlichen die gleiche Struktur aufweist und die Porengröße im Wesentlichen gleichmäßig ist.

5. Würziges zusammengesetztes Produkt nach irgendeinem der Ansprüche 1 bis 4, wobei die Creme, in Gewicht der Cremeformulierung,
25 bis 40 % Produkt auf Milchbasis,
15 bis 30 % nicht-süßes Füllmittel und
15 bis 30 % Fett umfaßt.

6. Würziges zusammengesetztes Produkt nach Anspruch 5, wobei das Produkt auf Milchbasis ein fermentiertes Milchprodukt umfaßt, das von 5 bis 15 % des Gewichts der Cremeformulierung bildet.

7. Würziges zusammengesetztes Produkt nach entweder Anspruch 5 oder Anspruch 6, wobei die Creme dadurch hergestellt wird, daß man das Produkt auf Milchbasis und das Füllmittel zur Pasteurisierung wärmebehandelt und das Fett nach dem Abkühlen der pasteurisierten Mischung auf eine Temperatur unter 30°C zugibt.

8. Würziges zusammengesetztes Produkt nach irgendeinem der vorausgehenden Ansprüche, das wenigstens zwei Schichten des würzigem Schwamms mit einer Cremeschicht dazwischen umfaßt.

9. Verpacktes würziges zusammengesetztes Produkt nach irgendeinem der vorausgehenden Ansprüche.

10. Teig für einen würzigen Schwamm, der, in Gewicht der Teigformulierung, enthält
- 20 bis 30 Gew.-% Mehl,
- 5 bis 15 Gew.-% eines nicht-süßen Füllmittels,
- 3 bis 20 % Fett,
- Eibasis,
- ein chemisches Treibmittel,
wobei das nicht-süße Füllmittel 5 bis 15 Gew.-% Poly- oder Oligo-Saccharid, vorzugsweise Maltodextrin, umfaßt, und wobei der Teig einen Aw im Bereich von etwa 0,72 bis 0,93 aufweist.

## Revendications

1. Produit alimentaire composite salé comportant une partie à base de pâte et une garniture,
la partie à base de pâte étant un gâteau de Savoie salé avec une Aw dans la plage d'environ 0,72 à 0,93, et
la garniture étant une crème salée avec une Aw dans la plage d'environ 0,85 à 0,93,
dans lequel le gâteau de Savoie salé comprend, en poids de la formulation de pâte,
20 à 30 % en poids de farine,
5 à 15 % en poids d'agent gonflant non sucré,
des matières grasses, une base d'oeufs et un agent levant chimique,
dans lequel l'agent gonflant non sucré comprend 5 à 15 % en poids d'oligo-saccharide ou polysaccharide, de préférence de la maltodextrine.

2. Produit alimentaire composite salé selon la revendication 1, dans lequel le gâteau de Savoie comprend, en poids de la formulation de pâte, 3 à 10 % en poids d'amidon.

3. Produit alimentaire composite salé selon l'une quelconque des revendications 1 et 2, dans lequel le gâteau de Savoie comprend 3 à 20 % de matières grasses en poids de la formulation de pâte.

4. Produit composite salé selon l'une quelconque des revendications 1 à 3, dans lequel le gâteau de Savoie a sensiblement la même structure dans tout le gâteau de Savoie et la taille des pores est sensiblement régulière.

5. Produit composite salé selon l'une quelconque des revendications 1 à 4, dans lequel la crème comprend, en poids de la formulation de crème,
25 à 40 % de produit laitier
15 à 30 % d'agent gonflant non sucré et
15 à 30 % de matières grasses.

6. Produit composite salé selon la revendication 5, dans lequel le produit laitier comprend un produit laitier fermenté constituant de 5 à 15 % du poids de la formulation de crème.

7. Produit composite salé selon l'une quelconque des revendications 5 et 6, dans lequel la crème est fabriquée en traitant à la chaleur le produit laitier et l'agent gonflant jusqu'à pasteurisation et en ajoutant les matières grasses après refroidissement du mélange pasteurisé jusqu'à une température inférieure à 30°C.

8. Produit composite salé selon l'une quelconque des revendications précédentes, comprenant au moins deux couches de gâteau de Savoie salé avec une couche de crème entre les couches.

9. Produit composite salé emballé selon l'une quelconque des revendications précédentes.

10. Gâteau de Savoie salé contenant en poids de la formulation de pâte :
- 20 à 30 % en poids de farine,
- 5 à 15 % en poids d'agent gonflant non sucré,
- 3 à 20 % de matières grasses,
- une base d'oeuf,
- un agent de levage chimique,
dans lequel l'agent gonflant non sucré comprend 5 à 15 % en poids d'un poly- ou oligosaccharide, avantageusement de la maltodextrine, et dans lequel ladite pâte a une valeur Aw comprise dans l'intervalle d'environ 0,72 à 0,93.
